# FASCICULE DE BREVET EUROPEEN

(11) **EP 3 876 800 B1**
(45) Date de publication et mention de la délivrance du brevet: **27.08.2025**
(21) Numéro de dépôt: 19801338.5
(22) Date de dépôt: 08.11.2019
(51) Int. Cl.: A47J 31/36, A47J 31/52

(54) **DISPOSITIF ET PROCÉDÉ DE DÉTECTION D'UNE ANOMALIE DE FERMETURE D'UN GROUPE D'INFUSION**
VORRICHTUNG UND VERFAHREN ZUR ERKENNUNG EINER ANOMALIE BEIM SCHLIESSEN EINER INFUSIONSEINHEIT
DEVICE AND METHOD FOR DETECTING AN ANOMALY IN THE CLOSING OF AN INFUSION UNIT

(30) Priorité: 09.11.2018 FR 1860344
(43) Date de publication de la demande: 15.09.2021
(73) Titulaire: Compagnie Méditerranéenne des Cafés, 06510 Carros (FR)
(72) Inventeur: GOUBELY, Aimé, 06340 La Trinité (FR)
(74) Mandataire: Hautier IP
(86) Numéro de dépôt international: PCT/EP2019/080769
(87) Numéro de publication internationale: WO 2020/094881

(56) Documents cités:
- EP-A1- 1 171 021
- EP-A1- 1 171 021
- EP-A1- 2 926 698
- EP-A1- 2 926 698
- FR-A1- 2 981 838
- FR-A1- 2 981 838

## Description

### DOMAINE TECHNIQUE DE L'INVENTION

La présente invention concerne un procédé et une machine de production de boissons par infusion d'un produit sous forme de conditionnement.

Elle trouve plus particulièrement son application dans le domaine des machines à café de type EXPRESSO. Elle pourra également s'appliquer à la production de boissons à partir d'autres matières telles que le thé.

### ÉTAT DE LA TECHNIQUE

De nombreuses machines de préparation de boissons, telles des machines à thé ou à café, à usage domestique ou professionnel, utilisent désormais des conditionnements, également désignés capsules ou doses, qui forment un ensemble relativement compact de produit à infuser.

Ces machines comprennent un groupe d'infusion comportant deux parties dont au moins une est mobile par rapport à l'autre. Un éloignement relatif de ces deux parties permet d'ouvrir le groupe d'infusion, tandis qu'un rapprochement de ces deux parties permet de fermer le groupe d'infusion. Cette mobilité est assurée par une motorisation électrique permettant ainsi sélectivement d'ouvrir ou de fermer le groupe d'infusion. Le groupe d'infusion délimite un volume interne entre les deux parties. L'ouverture permet une introduction, dans ledit volume interne, du conditionnement comprenant le produit à infuser, tel du café ou du thé, préférentiellement moulu, ou l'éjection d'une dose usagée.

La fermeture permet de fermer le groupe d'infusion autour de ladite dose de produit, inclus son enveloppe, de manière étanche, avant de procéder à une injection d'eau chaude sous pression dans le volume interne du groupe d'infusion, pour extraire, à partir du produit, une boisson.

Avant de procéder à l'injection d'eau chaude, il convient de s'assurer que le groupe d'infusion est bien fermé, afin de garantir son étanchéité. Or il peut arriver qu'une dosette soit mal engagée, se coince et impaire empêche la fermeture totale du groupe d'infusion.

Pour répondre à ce problème, les documents WO2011147792 ou FR2916336 proposent des machines dont la fiabilité est globalement élevée. Cette fiabilité élevée résulte essentiellement d'un fonctionnement séquentiel de la machine reposant sur un nombre de pièces et une cinématique bien spécifiques.

Toujours avec pour objectif de répondre à ce problème, d'autres solutions prévoient d'utiliser un capteur de position, disposé sur la motorisation ou sur un autre élément mobile, tel qu'une transmission, dont la position est indicative de la fermeture du groupe d'infusion. Ainsi, le document WO2005/058111 décrit quant à lui une machine dans laquelle le positionnement de la capsule est contrôlé par des micro-interrupteurs.

En outre, il est encore connu, par exemple de EP11171021, d'employer une analyse de l'intensité du courant de commande de la motorisation pour détecter un problème de fermeture, pouvant être lié à une dosette coincée.

Les documents EP2926698 et EP2981838 prévoient, dans une machine à café, des moyens de mesure d'un paramètre électrique représentatif de l'absorption du courant d'un moteur actionnant les parties de la chambre d'infusion, des moyens pour comparer à une référence fixée une évolution du paramètre mesuré en fonction du temps lors du transfert de l'ensemble de la position ouverte à la position fermée et des moyens pour fournir à des moyens d'activation une entrée résultant de la comparaison de l'évolution dudit paramètre mesuré à la référence de consigne.

Cependant en dépit de ces solutions existantes, en pratique, on observe encore bien souvent que la machine se bloque et empêche la préparation de la boisson. Le conditionnement coincé doit alors être retiré manuellement par l'utilisateur, voire par un service dédié à la maintenance des machines.

Il existe donc un besoin consistant à rendre encore plus fiables les machines de préparation de boissons à partir d'un conditionnement enfermant un produit à infuser, en réduisant les risques de coincement d'un conditionnement dans la machine. Tel est un objectif de la présente invention.

### RÉSUMÉ DE L'INVENTION

L'invention concerne un procédé de détection d'une anomalie de fermeture d'un groupe d'infusion d'une machine de préparation de boissons telle une machine à thé ou à café, de préférence de type expresso., le groupe d'infusion comportant une chambre d'infusion délimitée par deux parties présentant une mobilité l'une par rapport à l'autre, au moins l'une des deux parties étant déplacée par un actionneur comprenant une motorisation électrique, lesdites deux parties étant configurées pour, lors d'une phase de fermeture du groupe d'infusion se rapprocher l'une de l'autre pour enserrer un conditionnement. Le procédé comprend les étapes suivantes, avantageusement exécutées par au moins un dispositif de traitement de données comprenant par exemple un calculateur ou un microprocesseur :
- détermination d'une caractéristique nominale d'intensité d'un courant d'alimentation de la motorisation en fonction du temps,
- mesure de l'intensité du courant d'alimentation de la motorisation, au moins au cours d'une phase de fermeture du groupe d'infusion,
- comparaison de l'intensité mesurée avec ladite caractéristique nominale, et détection d'une anomalie de fermeture lorsqu'une mesure de l'intensité s'éloigne de la caractéristique nominale de plus d'un seuil.

La caractéristique nominale est déterminée à partir d'au moins une phase de mesure effectuée sur ladite machine de préparation de boissons au cours d'au moins d'une phase de fermeture s'étant correctement déroulée, la caractéristique nominale étant réactualisée à partir d'une caractéristique d'intensité du courant d'alimentation de la motorisation en fonction du temps déterminée lors d'une phase de fermeture s'étant correctement déroulée.

La fabrication industrielle des groupes d'infusion, typiquement par moulage et usinage, induit des variations dimensionnelles inévitables. De telles variations se retrouvent aussi pour les conditionnements, dont les emballages sont typiquement réalisés par superposition de plusieurs couches par exemple de papier ou encore par emboutissage de feuilles d'aluminium. De même chaque fabrication du moteur électrique présente des variabilités de ces caractéristiques et particulièrement de sa consommation de courant. Dans le cadre du développement de la présente invention il a été découvert, en analysant les cas de défaillance des solutions de l'art antérieur, que les variations dimensionnelles et caractéristiques électriques pouvaient être importantes. Cependant, avec les procédés actuels de détection de résistance de fermeture du groupe d'infusion, il n'est pas possible de déterminer si les variations de cette résistance sont imputables aux variations du mécanisme ou à une anormalité dans la fermeture du groupe et notamment à un conditionnement coincé dans le mécanisme car celui-ci ne conduit pas nécessairement à des variations importantes de la résistance à la fermeture du groupe d'infusion. Aussi, si l'on prend une tolérance importante autour du seuil de fonctionnement nominal afin de prendre en compte ces variations dimensionnelles et même si l'intensité du courant d'alimentation de la motorisation présente des différences notables entre une fermeture correcte et une anomalie de fermeture, ces différences peuvent être masquées par cette variabilité-importante des caractéristiques propres à chaque réalisation de groupe infusion. Ainsi, les méthodes de détection d'un défaut de fermeture de l'art antérieur peuvent être incapables de correctement détecter un coincement de dosette, car incapables de discerner les variations de résistance intrinsèque du groupe infusion de celles dues à un conditionnement coincé. La machine de préparation peut alors se bloquer et nécessiter une maintenance de la part d'un opérateur ou de l'utilisateur, entraînant momentanément au moins une indisponibilité de la machine.

A contrario, si l'on prend une tolérance trop faible autour du seuil de fonctionnement nominal, une variation dimensionnelle ou électrique trop importante peut conduire à dépasser un seuil de détection d'une anomalie. La conséquence est que la machine conclura alors, à tort, à la présence d'une anomalie de fermeture.

Ainsi, la machine de préparation de boissons se mettra en état d'erreur et sera alors, momentanément au moins, indisponible.

L'invention, prévoit que la détection soit adaptée à chaque groupe d'infusion. L'étape de détermination d'une caractéristique nominale d'intensité, l'étape de mesure de l'intensité du courant d'alimentation et l'étape de comparaison sont effectuées sur un même groupe d'infusion. Ainsi, les seuils d'identification d'une anomalie de fermeture sont déterminés par le groupe d'infusion effectivement utilisé dans la machine considérée. Cela permet de discerner distinctement la part de résistance due au mécanisme du groupe infusion de la machine et ainsi d'avoir des seuils d'identification très proches d'une caractéristique nominale observée lors d'une phase de fermeture correctement déroulée dans ce groupe. La caractéristique nominale intensité ne provient pas d'une modélisation ou d'une détermination empirique réalisée à partir d'un autre groupe d'infusion, et qui est appliquée à un ensemble de groupes du même type.

Le niveau de précision de détection permet d'éradiquer les cas de non détection qui conduisaient au lancement de cycle d'infusion avec la chambre d'infusion incomplètement fermée avec pour conséquence des fuites et projection d'eau (et de café) dans et parfois hors de la machine.

Cela permet également de détecter très rapidement qu'une variation de l'intensité du courant d'alimentation de la motorisation est effectivement dû à une anomalie. On peut alors, dès le début de cette anomalie, arrêter la phase de fermeture. Il s'ensuit que le conditionnement a moins de chances de rester coincé après que les deux parties mobiles aient été éloignées l'une de l'autre. Le risque de rupture d'un conditionnement est également réduit voire supprimé.

Ces avantages sont considérables puisque avec les dispositifs de l'art antérieur, la détection du coincement s'effectuant souvent très tardivement après le début du coincement, le conditionnement se déchire et le produit à infuser qu'il renferme se disperse dans la machine. Une intervention de nettoyage, souvent longue et fastidieuse, est alors nécessaire. Le temps d'indisponibilité de la machine en est allongé ce qui peut entraîner un manque à gagner significatif lorsque la machine est utilisée dans un établissement commercial tel qu'un café, un hôtel ou un restaurant.

En outre, le procédé proposé permet d'augmenter significativement la sécurité de la machine. En effet, si le coincement des deux parties mobiles est dû à la présence d'un doigt d'un utilisateur, ce dernier est détecté très rapidement. Les deux chambres mobiles cessent de se rapprocher immédiatement n'aggravant ainsi pas le pincement du doigt.

Un autre avantage considérable de la présente invention est que la détection de l'anomalie de fermeture évolue dans le temps. Elle permet donc de prendre en compte l'évolution des dimensions et caractéristiques de résistance d'un groupe d'infusion, par exemple sous l'effet d'une usure mécanique, ou sous l'effet d'une dilatation des pièces formant le groupe.

Par ailleurs, elle permet de prendre en compte le changement d'une ou plusieurs pièces constituant le groupe d'infusion, voire un changement complet du groupe d'infusion.

De manière optionnelle, l'invention peut comprendre au moins l'une quelconque des caractéristiques suivantes qui peuvent être prises séparément ou en combinaison :
- Selon un exemple, l'actionneur comprenant une motorisation électrique comporte au moins l'un parmi : un vérin électrique, une genouillère motorisée électriquement, un dispositif à crémaillère comprenant un pignon entrainé par la motorisation électrique et une crémaillère engrainant avec le pignon, un jeu d'engrenages coopérant avec l'une ou les deux chambres mobiles.
- Comme indiqué ci-dessus, selon l'invention, la caractéristique nominale est réactualisée à partir d'une caractéristique d'intensité du courant d'alimentation de la motorisation, de préférence en fonction du temps. Cette caractéristique d'intensité du courant d'alimentation de la motorisation, à partir de laquelle la caractéristique nominale est réactualisée, est déterminée lors d'une phase de fermeture s'étant correctement déroulée.
- Selon un exemple, la réactualisation de la caractéristique nominale est effectuée en moyennant des caractéristiques d'intensité du courant d'alimentation de la motorisation en fonction du temps correspondant aux plus récentes phases de fermeture correctement déroulées comprises dans une fenêtre glissante d'au plus p phases de fermeture correctement déroulées, avec p entier, préférentiellement compris entre 2 et 100. Selon un exemple p est compris entre 5 et 20 et de préférence p est égal à 10.

Selon un exemple, une première caractéristique nominale est obtenue en déterminant n caractéristiques d'intensité du courant d'alimentation de la motorisation en fonction du temps, correspondant à n phases de fermeture correctement déroulées, et en moyennant ces n caractéristiques, avec n entier, préférentiellement compris entre 1 et 10.

Selon un exemple, n est égal à 2.

Selon un exemple, une étape de réinitialisation consistant à déterminer une nouvelle première caractéristique nominale et à remplacer la première caractéristique nominale précédemment déterminée par ladite nouvelle première caractéristique nominale.

Ainsi, l'étape de réinitialisation replace le procédé dans un état initial, c'est-à-dire dans l'état dans lequel il se trouvait avant détermination de la première caractéristique nominale.

Ce remplacement s'effectue dans une mémoire associée à la machine.
- Selon un exemple, le seuil est défini par un premier gabarit, dit gabarit min, sensiblement parallèle à la caractéristique nominale par valeur inférieure et par un deuxième gabarit, dit gabarit max, sensiblement parallèle à la caractéristique nominale par valeur supérieure.
- Selon un exemple, le gabarit min présente une valeur sensiblement égale à - X% de la valeur de la caractéristique nominale, avec préférentiellement X > 0 et X inférieur ou égal à 20, de préférence X inférieur ou égal à 10, de préférence X inférieur ou égal à 5.

Ainsi, à chaque instant, l'intensité du gabarit min est à la fois :
- inférieure à l'intensité de la caractéristique nominale et à la fois
- supérieure ou égal à l'intensité de la caractéristique nominale - 10%, et de préférence - 5%.
- Selon un exemple, le gabarit max présente une valeur sensiblement égale à + Y% de la valeur de la caractéristique nominale, avec préférentiellement Y > 0 et inférieur ou égal à 20, de préférence X inférieur ou égal à 10, de préférence X inférieur ou égal à 5.

Ainsi, à chaque instant, l'intensité du gabarit max est à la fois:
- supérieure à l'intensité de la caractéristique nominale et à la fois
- inférieure ou égal à l'intensité de la caractéristique nominale + 10%, et de préférence + 5%.
- Selon un exemple, l'exécution de l'une au moins des étapes suivantes s'effectue lorsqu'une anomalie de fermeture est détectée :
   - émission d'un signal visuel d'alarme à l'attention d'un utilisateur de la machine,
   - émission d'un signal sonore d'alarme à l'attention d'un utilisateur de la machine,
   - envoi d'un message électronique à un centre de maintenance,
   - interruption de la phase de fermeture,
   - déclenchement d'une phase d'éloignement des deux parties (3,4),
   - interruption d'une circulation d'eau dans un circuit de la machine, par exemple par arrêt d'une pompe de circulation d'eau dans un circuit de la machine.

Selon un autre mode de réalisation, l'invention porte sur un dispositif de détection d'une anomalie de fermeture d'un groupe d'infusion d'une machine de préparation de boissons telle une machine à thé ou à café, de préférence de type expresso, le groupe d'infusion comportant une chambre d'infusion délimitée par deux parties présentant une mobilité l'une par rapport à l'autre, au moins l'une des deux parties étant déplacée par un actionneur comprenant une motorisation électrique, lesdites deux parties étant configurées pour, lors d'une phase de fermeture du groupe d'infusion, se rapprocher l'une de l'autre pour enserrer un conditionnement, le dispositif étant configuré pour exécuter les étapes suivantes :
- détermination d'une caractéristique nominale d'intensité d'un courant d'alimentation de la motorisation en fonction du temps,
- mesure de l'intensité du courant d'alimentation de la motorisation, au moins au cours d'une phase de fermeture du groupe d'infusion,
- comparaison de l'intensité mesurée avec ladite caractéristique nominale, et détection d'une anomalie de fermeture lorsqu'une mesure de l'intensité s'éloigne de la caractéristique nominale de plus d'un seuil.

La caractéristique nominale est déterminée à partir d'au moins une phase de mesure effectuée sur ladite machine de préparation de boissons au cours d'au moins une phase de fermeture correctement déroulée.

De préférence, le dispositif comprend un calculateur tel qu'un microprocesseur configuré pour exécuter les étapes ci-dessus.

Selon un mode de réalisation, la caractéristique nominale est déterminée à partir d'au moins une phase de mesure effectuée sur ladite machine de préparation de boissons au cours d'au moins une phase de fermeture s'étant correctement déroulée et au cours de laquelle un conditionnement est enserré entre les deux parties de la chambre d'infusion. Ainsi, la caractéristique nominale déterminée en présence d'un conditionnement.

Selon un autre mode de réalisation, l'invention porte sur une machine de préparation de boissons comprenant au moins :
- au moins un groupe d'infusion comportant une chambre d'infusion délimitée par deux parties présentant une mobilité l'une par rapport à l'autre,
- un actionneur comprenant une motorisation électrique, l'actionneur étant configuré pour :
   o lors d'une phase de fermeture du groupe d'infusion : rapprocher les deux parties l'une de l'autre pour enserrer un conditionnement,
   o lors d'une phase d'ouverture du groupe d'infusion : éloigner les deux parties l'une de l'autre pour permettre à un conditionnement de pénétrer ou de sortir de la chambre d'infusion,

   - un dispositif comme décrit précédemment.

Selon un mode de réalisation, l'une des parties de la chambre d'infusion est fixe par rapport à un bâti de la machine. L'autre partie est mobile, en translation ou en rotation, par rapport au bâti de la machine.

Selon un autre mode de réalisation, les deux parties de la chambre d'infusion sont mobiles, en translation ou en rotation, par rapport au bâti de la machine.

La machine est configurée de sorte que, lorsque le dispositif de détection détecte une anomalie de fermeture, l'actionneur stoppe le rapprochement des deux parties et/ou éloigne les deux parties l'une de l'autre.

Selon un autre mode de réalisation, l'invention porte sur une utilisation d'un conditionnement comprenant un produit à infuser, pour :
- mettre en œuvre une machine de préparation de boissons comprenant un conditionnement entre les deux parties, ou
- mettre en œuvre le procédé tel que décrit précédemment.

### BRÈVE DESCRIPTION DES FIGURES

D'autres caractéristiques, détails et avantages de l'invention ressortiront plus clairement de la description détaillée donnée ci-après à titre indicatif en relation avec des dessins sur lesquels :
- la figure 1a illustre un premier mode de réalisation d'un groupe d'infusion,
- la figure 1b illustre un deuxième mode de réalisation d'un groupe d'infusion,
- la figure 2 illustre une caractéristique nominale et la comparaison d'une intensité avec cette caractéristique nominale.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Dans le cadre de la présente invention, on peut utiliser des conditionnements 2 renfermant un produit à infuser, par exemple de la mouture de café. Le produit à infuser est enfermé par une enveloppe dans un volume intérieur fermé du conditionnement. Le volume intérieur est configuré pour pouvoir être traversé par un liquide tel que l'eau lors de l'infusion. Il est par exemple délimité par une enveloppe formée de nappes filtrantes, par exemple en papier, en fibre ou en plastique, ou par une paroi en un matériau étanche, (par exemple de l'aluminium ou du plastique) mais rendue filtrante par perforation.

Lorsque l'enveloppe est formée de nappes filtrantes, ces dernières peuvent par exemple comprendre ou être formées de papier, de fibres ou de plastique.

Lorsque l'enveloppe est formée d'une paroi en un matériau étanche, cette dernière peut par exemple comprendre ou être formée d'aluminium ou de plastique.

Le conditionnement comprend un pourtour 21. Selon un exemple non limitatif, le volume 2 fermé renfermant le produit à infuser présente une symétrie axiale et le pourtour 21 est compris dans un plan perpendiculaire à l'axe de symétrie.

De manière non limitative le volume 2 renfermant le produit à infuser est constitué par l'assemblage de couches jointes par leurs périphéries au niveau d'une armature de support définissant un pourtour 21 périphérique.

La présente invention est utilisable avec des types variés de conditionnements. Elle n'implique notamment pas que le pourtour du conditionnement soit rigide. Elle s'applique aux conditionnements présentant une enveloppe extérieure souple de type dose ou rigide de type capsule et plus généralement à tout type de conditionnement à usage unique de produit à infuser. Elle s'applique également aux conditionnements dont l'enveloppe extérieure est apte à disparaître au moins en partie lors de l'infusion, par dissolution par exemple. Elle s'applique encore aux conditionnements formés d'un produit à infuser agrégé par un liant et/ou par l'application d'une pression. Un tel conditionnement formé d'un agrégat de produit à infuser tel que le café peut être constitué en dehors de la machine ou être constitué par un module dédié de la machine.

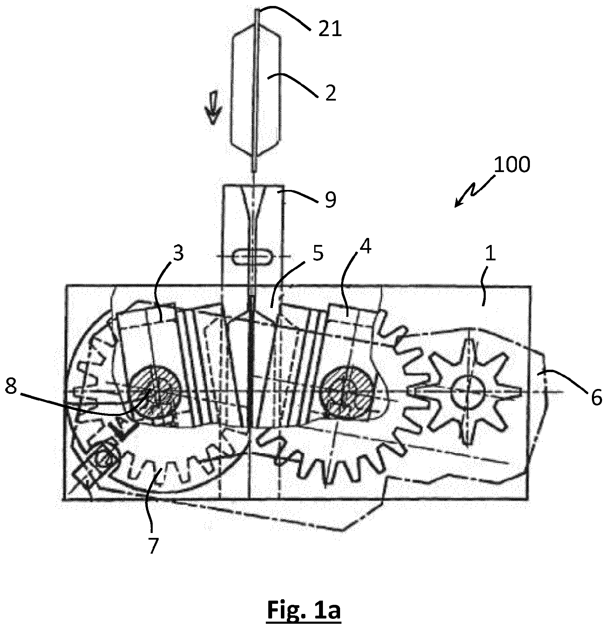

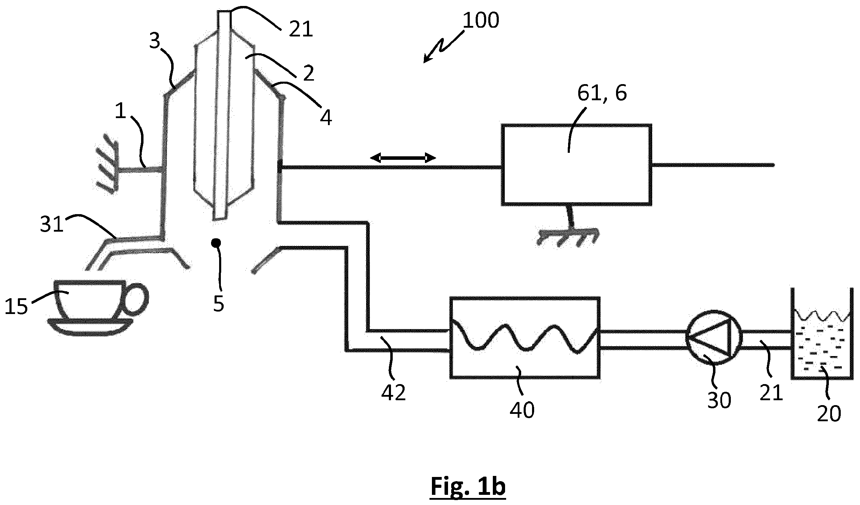

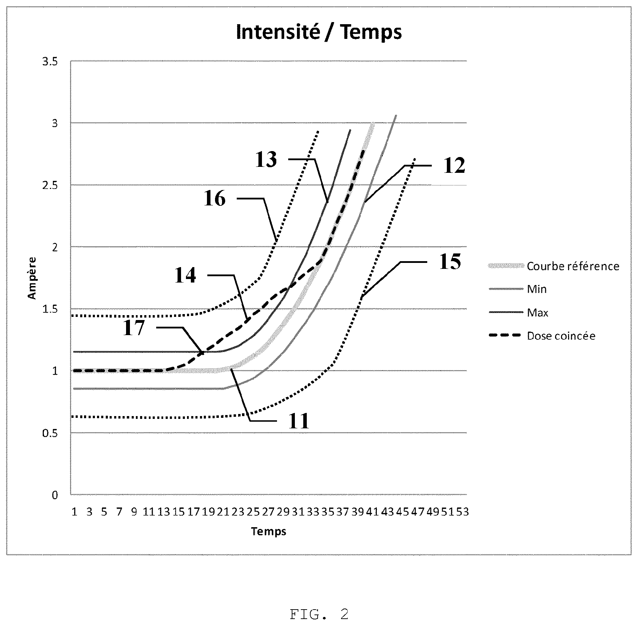

Des modes de réalisation de la présente invention vont maintenant être décrits en référence aux figures 1a, 1b et 2.

La figure 1a, présente un mode de réalisation d'au moins une partie d'une machine de préparation de boisson. Un corps fixe 1 accueille une motorisation 6 et un groupe d'infusion 100. Le groupe d'infusion 100 comprend deux parties 3, 4 complémentaires afin de délimiter un volume interne ou chambre d'infusion 5 dans laquelle peut être accueillie un conditionnement 2. Les deux parties 3, 4 sont mobiles l'une relativement à l'autre de manière à sélectivement ouvrir le groupe d'infusion 100 ou le fermer. La position ouverte, figurée en traits pointillés, permet l'introduction d'une nouvelle dosette 2 ou l'éjection d'une ancienne dosette, usagée après infusion. Une glissière 9 permet de guider la dosette 2 lors de son introduction. La position fermée, figurée en traits pleins, permet de maintenir un conditionnement 2 dans ledit volume interne, avantageusement étanche, pendant qu'un injecteur injecte de l'eau chaude sous pression afin de réaliser l'infusion et la production d'une boisson.

La mobilité des deux parties 3, 4 peut être selon un mouvement quelconque. Sur l'exemple illustré en figure 1a, le mouvement est rotatif. Chaque partie 3, 4 est articulée en rotation, relativement au corps 1 fixe par un arbre 8. La partie 3 comprend un engrenage 7 externe apte à engrener avec un engrenage complémentaire de la partie 4. La motorisation 6, ici rotative, comprend un pignon apte à engrener l'un des deux engrenages 7 précédents, par exemple l'engrenage de la partie 4, comme illustré.

Comme illustré en figure 1b, les deux parties mobiles peuvent être mutuellement éloignées et rapprochées par un mouvement de translation, de préférence une translation linéaire.

Sur l'exemple de la figure 1b, on retrouve la chambre d'infusion 5 comprenant les chambres 3, 4. Dans cet exemple, la chambre 3 est fixe par rapport au corps 1 du groupe d'infusion 100. Le corps 1 est solidaire d'un bâti de la machine.

La chambre 4 est mobile en translation par rapport au corps 1 du groupe d'infusion 100. L'actionneur 61, comprenant une motorisation 6 électrique, commande le déplacement de la partie mobile 4 de la chambre d'infusion 5.

Cet actionneur peut comprendre par exemple un vérin électrique, un système pignon-crémaillère, une vis sans fin etc.

La machine de préparation de boissons comprend également un réservoir d'eau 20 en communication fluidique avec une pompe 30 via un conduit 21. La pompe 30 permet d'alimenter en eau une entrée d'une chaudière 40. Alternativement, la chaudière 40 est alimentée par un réseau de distribution d'eau sous pression. Une sortie de la chaudière 40 est en communication fluidique avec la chambre d'infusion 5. Typiquement, un conduit 42 relie la sortie de la chaudière 40 à l'une parmi la partie 3 ou la partie 4. Si l'eau chaude fournie par la chaudière 40 parvient à la chambre d'infusion 5 par la partie mobile 4, le conduit 42 est de préférence souple pour accompagner le déplacement de cette partie mobile 4.

Lorsque les deux parties 3, 4 sont éloignées, un conditionnement 2 peut alors pénétrer dans la chambre d'infusion 5. Lors de la phase de fermeture, les parties 3, 4 se rapprochent mutuellement jusqu'à enserrer conditionnement 2. Si la phase de fermeture se déroule correctement, le conditionnement 2 est enfermé dans la chambre d'infusion 5. Cette dernière peut par exemple former une enveloppe étanche autour du conditionnement 2. La machine déclenche alors l'alimentation de la chambre d'infusion 5 en eau chaude issue de la chaudière 40. L'eau chaude infuse le produit contenu dans le conditionnement 2 et s'échappe de la chambre d'infusion 5 par des conduits tels que le conduit 31 menant à un récipient, typiquement une tasse 15. En fin d'infusion, les deux parties 3, 4 s'éloignent mutuellement. La chambre d'infusion 5 s'ouvre permettant au conditionnement de s'échapper, par exemple par gravité.

Sur l'exemple illustré en figure 1b, la phase de fermeture ne se déroule pas correctement et le conditionnement se trouve coincé entre les parties 3 et 4.

L'invention propose une solution efficace pour détecter une anomalie de fermeture du groupe d'infusion 100.

Ce procédé comprend les étapes suivantes. Au cours d'une première étape, il est déterminé une caractéristique nominale 11, figurant l'intensité du courant d'alimentation de la motorisation 6 en fonction du temps. Cette caractéristique nominale 11 couvre au moins la phase de fermeture du groupe d'infusion 100. Muni de cette caractéristique nominale 11, typiquement enregistrée dans une mémoire du groupe d'infusion 5 plus généralement de la machine, le procédé mesure l'intensité 14 du courant d'alimentation de la motorisation 6. Ceci est réalisé par le procédé au moins durant la fermeture du groupe d'infusion 100. L'intensité est typiquement mesurée régulièrement au cours de la phase de fermeture. Chaque mesure 14 de l'intensité est ensuite comparée avec la caractéristique nominale 11.

Une anomalie est détectée lorsqu'une mesure de l'intensité du courant d'alimentation circulant dans la motorisation 6 s'éloigne trop, en plus ou en moins, de la caractéristique nominale 11, soit de la valeur d'intensité indiquée par la caractéristique nominale 11, à l'instant correspondant dans la phase de fermeture. Cet éloignement peut être indiqué au moyen d'au moins un seuil 12, 13.

Selon une caractéristique avantageuse de l'invention, la caractéristique nominale 11 est déterminée par apprentissage sur la machine de préparation de boissons même où est implanté le procédé de détection d'anomalie. La caractéristique nominale 11 est obtenue à partir d'au moins une phase de mesure effectuée sur ladite machine, au cours d'au moins une phase de fermeture correctement déroulée. Une phase de fermeture correctement déroulée correspond à une phase de fermeture au cours de laquelle le conditionnement ne se trouve pas coincé par les deux parties 3, 4 de la chambre d'infusion 5. Le résultat d'une phase de fermeture correctement déroulée est que le conditionnement 2 se trouve enserré entre les deux parties 3,4 et positionné dans une position d'infusion. Le cycle d'infusion peut se poursuivre. Typiquement, de l'eau chaude, de préférence sous pression en provenance d'une chaudière 40, pénètre dans la chambre d'infusion 5 et infuse le produit contenu dans le conditionnement 2.

Ainsi la caractéristique nominale 11 fournit une référence du comportement correct, lorsque la fermeture du groupe d'infusion se passe sans anomalie, à laquelle peut être comparé, en temps réel, le comportement du groupe d'infusion 100 lors d'une nouvelle fermeture surveillée par le procédé de détection d'anomalie. Si la mesure d'intensité 14, réalisée en temps réel, au cours d'une fermeture, « suit » la caractéristique nominale 11, d'assez près, il peut être considéré que la fermeture surveillée se passe sans anomalie.

L'avantage d'établir la caractéristique nominale 11 sur la machine même où est implémenté le procédé de détection d'anomalie, est que cette caractéristique nominale 11 est personnalisée en ce qu'elle intègre intrinsèquement tous les particularismes de cette machine, tels que les variations dimensionnelles ou autres et permet ainsi de s'en affranchir.

Une caractéristique d'intensité de courant d'alimentation circulant dans la motorisation 6 en fonction du temps est une courbe figurant l'intensité en ordonnées et le temps en abscisses. Un exemple d'une telle caractéristique est montré à la figure 2 avec la caractéristique nominale 11. Une telle caractéristique est déterminée par tout moyen.

Selon un mode de réalisation, l'intensité est régulièrement mesurée et enregistrée en fonction du temps, préférentiellement au cours d'une phase de fermeture. Il est encore possible de réaliser plusieurs observations/relevés et d'appliquer un filtrage, par exemple un moyennage entre les différentes caractéristiques observées.

Une telle personnalisation est particulièrement avantageuse en ce que, en appliquant les solutions de l'état de la technique, la prise en compte des variations dimensionnelles conduit à augmenter le seuil utilisé pour comparer une intensité de courant acceptable à une caractéristique nominale. Il s'ensuit, dans l'art antérieur, une tolérance élargie qui peut permettre à une anomalie de ne pas être détectée.

Au contraire la caractéristique de l'invention, en ce qu'elle personnalise la caractéristique nominale 11, permet d'obtenir une caractéristique nominale 11 plus proche du comportement effectif, et donc plus adaptée à la machine surveillée. Ceci permet avantageusement de réduire le seuil d'acceptation et ainsi de réduire la tolérance, permettant d'avoir une comparaison beaucoup plus discriminante, sans pour autant introduire de fausses détections. Par ailleurs, cela permet de détecter beaucoup plus précocement dans le temps une anomalie. La force de serrage exercée sur la dose ou sur un doigt coincé entre les 2 parties 3, 4 est alors beaucoup moins élevée à l'instant où la phase de fermeture est interrompue.

Ceci est illustré par la figure 2. La caractéristique nominale 11 est figurée au centre. Si une unique caractéristique nominale 11 est employée, commune à toutes les machines, il convient de tenir compte de la dispersion dimensionnelle inévitablement liée à une production en série. Ceci conduit, en appliquant les solutions de l'état de la technique, à des gabarits min 15 et max 16 disposés relativement éloignés de la caractéristique nominale 11. Cet éloignement conduit à accepter, du fait de la tolérance élargie, une mesure 14 de l'intensité, alors même qu'elle est déviante et indicative d'une anomalie de fermeture.

Au contraire si, selon l'invention, la caractéristique nominale 11 est déterminée pour la machine surveillée, on s'affranchit de la dispersion dimensionnelle et des gabarits min 12 et max 13 peuvent être disposés beaucoup plus proches de la caractéristique nominale 11 et utilisés pour comparer avec une intensité 14 mesurée, sans risque d'introduire de fausses détections. Ainsi une déviation 17 de l'intensité mesurée 14, indicative d'une anomalie de fermeture, peut être détectée dès qu'elle dépasse de l'un des gabarits 12, 13. Cette même anomalie n'aurait pas été détectée avec les seuils des gabarits min 15 et max 16.

La sensibilité d'une anomalie de fermeture étant beaucoup plus faible que la sensibilité à la dispersion dimensionnelle, la caractéristique de personnalisation d'une caractéristique nominale 11 à une machine, apportée par l'invention s'avère essentielle.

Afin d'améliorer encore cette personnalisation, la caractéristique nominale 11 est réactualisée, à partir d'une caractéristique d'intensité du courant d'alimentation de la motorisation 6 en fonction du temps déterminé lors d'une phase de fermeture correctement déroulée. Afin d'être indicatif d'un fonctionnement nominal/correct, auquel il est possible de faire référence, il convient de ne considérer que des phases de fermeture s'effectuant correctement, sans anomalie. Cette réactualisation est avantageusement réalisée sur une base régulière, tout au long de la vie de la machine. Ceci permet avantageusement de tenir compte, en l'intégrant dans la caractéristique nominale 11, des variations dimensionnelles ou autres, pouvant intervenir, par exemple du fait du vieillissement ou usure de la machine et de ses composants mécaniques, électriques et/ou électroniques. Ainsi la caractéristique nominale 11 reste indicative de l'état de la machine et de son bon fonctionnement en fermeture, tout au long du cycle de vie.

En ce sens, le procédé proposé ne prend pas en compte un intervalle de tolérance par rapport à une même caractéristique nominale déterminée pour un ensemble de machines.

Lors de la première utilisation de la machine, il convient de déterminer une première caractéristique nominale 11. Contrairement à l'art antérieur qui implémente une caractéristique standard, typiquement déterminée sur une autre machine, une telle possibilité n'est pas ouverte pour une machine selon l'invention. Cette première caractéristique nominale 11 est obtenue en effectuant un ou plusieurs cycles de fonctionnement comprenant au moins une phase de fermeture. Au cours de ce(s) fermeture(s), l'intensité est mesurée en fonction du temps afin de déterminer une ou plusieurs caractéristiques d'intensité du courant d'alimentation de la motorisation 6 en fonction du temps. Ceci est réalisé n fois. Il est vérifié que chaque phase de fermeture se déroule correctement, sans anomalie. A défaut, la caractéristique obtenue est rejetée. n est entier, préférentiellement compris entre 1 et 10, et encore préférentiellement égal à 2. Pour n au moins égal à 2, les différentes caractéristiques retenues sont avantageusement moyennées, afin de rendre plus robuste la première caractéristique nominale 11 résultante.

Une fois cette caractéristique nominale 11, première ou initiale, obtenue et enregistrée, le procédé peut détecter une anomalie au cours des phases de fermeture ultérieures et peut pleinement être mis en œuvre. Il est ainsi aussi possible de faire automatiquement la différence entre une fermeture correctement déroulée et une anomalie.

Toute phase de fermeture correctement déroulée peut être utilisée pour déterminer une nouvelle caractéristique intensité - temps et l'employer pour réactualiser la caractéristique nominale 11. Alternativement il est encore possible de ne réactualiser que selon une fréquence plus réduite.

Selon un mode de réalisation possible, la réactualisation peut être effectuée au moyen d'une fenêtre glissante d'au plus p telles caractéristiques intensité - temps. Pour cela pour toute phase de fermeture correctement déroulée, après détermination de la première caractéristique nominale 11, il est possible de déterminer une caractéristique. Pour chaque nouvelle telle caractéristique, une nouvelle caractéristique nominale 11 peut être recalculée en moyennant la première caractéristique nominale 11 avec les caractéristiques déterminées suivantes. On parle de fenêtre de largeur p en ce que l'on moyenne au plus p caractéristiques, la caractéristique nominale 11 étant incluse. La fenêtre est glissante en ce que, lorsque l'on dispose de plus de p caractéristiques, seules les p plus récentes sont conservées pour calculer la moyenne. L'étendue de moyennage p est entière, préférentiellement comprise entre 2 et 100. Des résultats satisfaisants ont été obtenus avec p égal à 10.

Le moyennage réalise un filtrage, améliorant la stabilité en limitant les effets d'une caractéristique atypique. Le fait d'introduire régulièrement dans l'ensemble des caractéristiques moyennées de nouvelles caractéristiques récentes assure une actualisation de la caractéristique nominale 11 et ainsi son adéquation avec le comportement réel de la machine, y compris si ce dernier évolue.

Une nouvelle caractéristique peut être déterminée et considérée pour le moyennage pour toute phase de fermeture correctement déroulée. Alternativement un nouveau calcul de caractéristique nominale 11 peut être effectué régulièrement tous les x cycles de fonctionnement ou encore toutes les y heures de fonctionnement ou de vie de la machine.

Lorsqu'une anomalie est détectée, un processus de maintenance peut être déclenché, par exemple incluant un retour en usine.

Un cas particulier se produit lorsque la machine est modifiée de manière conséquente. C'est le cas par exemple, suite à une maintenance, remplaçant une pièce importante, y inclus le groupe d'infusion 100 ou un de ses composants. Le comportement de la machine peut s'en trouver grandement modifié. Aussi, il convient dans ce cas de procéder à nouveau à une détermination d'une caractéristique nominale 11 première ou initiale. Aussi pour en informer le dispositif/procédé, ce dernier comprend avantageusement un dispositif de réinitialisation. Ce dispositif de réinitialisation, utilisable par l'utilisateur ou le technicien de maintenance, permet d'informer le dispositif/procédé de ladite modification. Il permet de lancer une étape de réinitialisation qui a pour effet de replacer le dispositif/procédé dans un état initial, ou similaire, dans lequel une nouvelle caractéristique nominale 11 doit être déterminée, en partant de zéro, à l'instar de la première caractéristique nominale 11 initiale décrite plus haut.

Par exemple, le dispositif de réinitialisation est activé par appui d'un bouton dédié situé sur le groupe d'infusion 100 ou plus généralement sur la machine. Ce bouton est par exemple accessible à un opérateur manuellement ou par un outil. De manière complémentaire ou alternative, ce bouton peut être activé automatiquement par l'introduction d'un groupe d'infusion dans la machine ou par le retrait d'un groupe d'infusion dans la machine. De préférence, l'accès à cette fonction est restreint pour la réserver au technicien de maintenance. Typiquement, on peut lancer une réinitialisation soit via un bouton dédié situé dans la machine, soit par une séquence de boutons qui donne des privilèges d'accès particuliers au technicien, soit via un menu d'accès réservé au technicien pour les machines disposant d'une interface écran avec menus.

Tel qu'illustré à la figure 2, le seuil 12, 13, utilisé pour l'étape de comparaison, est matérialisé par un gabarit min 12 sensiblement parallèle à la caractéristique nominale 11 par valeur inférieure et par un gabarit max 13 sensiblement parallèle à la caractéristique nominale 11 par valeur supérieure. La comparaison vérifie alors que l'intensité 14 mesurée reste comprise entre le gabarit min 12 et le gabarit max 13. Dès que l'intensité mesurée 14 sort de ces limites, comme en 17, une anomalie est détectée.

Selon une autre caractéristique, le gabarit min 12 présente une valeur sensiblement égale à - X% de la valeur de la caractéristique nominale 11. De manière complémentaire ou alternative, le gabarit max 13 présente une valeur sensiblement égale à + X% de la valeur de la caractéristique nominale 11. Comme détaillé plus haut, l'invention permet de déterminer une caractéristique nominale 11 très fiable. Ceci permet de considérer une tolérance autour de cette caractéristique nominale 11 et donc un seuil très faible. Ce seuil X est préférentiellement inférieur ou égal à 10, de préférence à 5.

Ainsi, à chaque instant, l'intensité du gabarit min 12 est à la fois:
- inférieure à l'intensité de la caractéristique nominale et à la fois
- supérieure ou égal à l'intensité de la caractéristique nominale 11 moins 10%, et de préférence moins 5%.

De même, à chaque instant, l'intensité du gabarit max 13 est à la fois:
- supérieure à l'intensité de la caractéristique nominale 11 et à la fois
- inférieure ou égal à l'intensité de la caractéristique nominale 11 plus 10%, et de préférence plus 5%.

Ceci permet avantageusement d'offrir un fort effet discriminant du procédé, alors même qu'une anomalie de fermeture, par exemple due à un conditionnement 2 coincé, peut ne créer qu'une déviation limitée.

Au contrainte, l'art antérieur, pour tenir compte des dispersions dimensionnelles, doit considérer un seuil au moins égal à +/- 20%. Une telle valeur diminue grandement son effet discriminant, au point d'être incapable de détecter une anomalie de type dosette coincée.

Sur le mode de réalisation, on prévoit que lorsque le dispositif de détection détecte une anomalie de fermeture, la machine effectue au moins l'une des actions suivantes :
- émission d'un signal visuel d'alarme à l'attention d'un utilisateur,
- émission d'un signal sonore d'alarme,
- envoi d'un message à un centre de maintenance,
- interruption de la phase de fermeture,
- déclenchement d'une phase d'éloignement des deux parties 3,4,
- interruption d'une circulation d'eau dans un circuit de la machine, par exemple par arrêt d'une pompe de circulation d'eau dans un circuit de la machine.

L'invention concerne encore un dispositif implémentant un tel procédé. Au vu de la description qui précède, il ressort clairement qu'en procédant à un auto apprentissage continu de sa propre caractéristique d'intensité lors d'un cycle "réel normal" et en effectuant systématiquement une comparaison de chaque phase de fermeture à celui-ci, la machine proposée permet de détecter une variation d'intensité avec une marge d'erreur très réduite puisque affranchie de toutes les variations parasites dues aux fabrications des multiples éléments.

Ainsi, la machine proposée permet de réduire au maximum la marge d'erreur indispensable autour du fonctionnement "réel normal" et permet de mesurer et de détecter de faibles variations d'intensité caractéristiques d'un pincement de dose coincé.

Au vu de la description qui précède, il apparaît clairement que l'invention offre une solution simple et robuste pour améliorer la fiabilité des machines de préparation de boissons, en identifiant avec plus de précision une anomalie de fermeture. Par ailleurs, l'invention permet d'augmenter considérablement la sécurité de ces machines en détectant une anomalie de fonctionnement bien plus tôt que ne le permettent les solutions de l'art antérieur.

Bien qu'il soit décrit dans la présente un mode de réalisation préféré de l'invention, il doit être bien compris que l'invention n'est pas limitée à ce mode, et que des variations peuvent être apportées à l'intérieur de la portée des revendications suivantes.

## Revendications

1. Procédé de détection d'une anomalie de fermeture d'un groupe d'infusion d'une machine de préparation de boissons, le groupe d'infusion (100) comportant une chambre d'infusion (5) délimitée par deux parties (3, 4) présentant une mobilité l'une par rapport à l'autre, au moins l'une des deux parties (3, 4) étant déplacée par un actionneur (61) comprenant une motorisation (6) électrique, lesdites deux parties (3, 4) étant configurées pour, lors d'une phase de fermeture du groupe d'infusion (100) se rapprocher l'une de l'autre pour enserrer un conditionnement (2), le procédé comprenant les étapes suivantes :
- détermination d'une caractéristique nominale (11) d'intensité d'un courant d'alimentation de la motorisation (6) en fonction du temps,
- mesure de l'intensité du courant d'alimentation de la motorisation (6), au moins au cours d'une phase de fermeture du groupe d'infusion (100),
- comparaison de l'intensité mesurée avec ladite caractéristique nominale (11), et détection d'une anomalie de fermeture lorsqu'une mesure de l'intensité s'éloigne de la caractéristique nominale (11) de plus d'un seuil (12, 13),
***caractérisé en ce que*** la caractéristique nominale (11) est déterminée à partir d'au moins une phase de mesure effectuée sur ladite machine de préparation de boissons au cours d'au moins une phase de fermeture s'étant correctement déroulée, la caractéristique nominale (11) étant réactualisée à partir d'une caractéristique d'intensité du courant d'alimentation de la motorisation (6) en fonction du temps déterminée lors d'une phase de fermeture s'étant correctement déroulée.

2. Procédé selon la revendication précédente, dans lequel la réactualisation de la caractéristique nominale (11) est effectuée en moyennant des caractéristiques d'intensité du courant d'alimentation de la motorisation (6) en fonction du temps correspondant aux plus récentes phases de fermeture correctement déroulées comprises dans une fenêtre glissante d'au plus p phases de fermeture correctement déroulées, avec p entier, préférentiellement compris entre 2 et 100.

3. Procédé selon la revendication précédente, dans lequel p est compris entre 5 et 20 et de préférence p est égal à 10.

4. Procédé selon l'une quelconque des revendications précédentes, dans lequel une première caractéristique nominale (11) est obtenue en déterminant n caractéristiques d'intensité du courant d'alimentation de la motorisation (6) en fonction du temps, correspondant à n phases de fermeture correctement déroulées, et en moyennant ces n caractéristiques, avec n entier, préférentiellement compris entre 1 et 10.

5. Procédé selon la revendication précédente, dans lequel n est égal à 2.

6. Procédé selon l'une quelconque des deux revendications, comprenant une étape de réinitialisation consistant à déterminer une nouvelle première caractéristique nominale (11) et à remplacer la première caractéristique nominale précédemment déterminée par ladite nouvelle première caractéristique nominale.

7. Procédé selon l'une quelconque des revendications précédentes, dans lequel le seuil (12, 13) est défini par un premier gabarit (12), dit gabarit min, sensiblement parallèle à la caractéristique nominale (11) par valeur inférieure et par un deuxième gabarit (13), dit gabarit max, sensiblement parallèle à la caractéristique nominale (11) par valeur supérieure.

8. Procédé selon la revendication précédente, dans lequel le gabarit min (12) présente une valeur sensiblement égale à - X% de la valeur de la caractéristique nominale (11), avec préférentiellement X >0 et X inférieur ou égal à 20, de préférence X inférieur ou égal à 10, de préférence X inférieur ou égal à 5.

9. Procédé selon l'une quelconque des deux revendications précédentes, dans lequel le gabarit max (13) présente une valeur sensiblement égale à + Y% de la valeur de la caractéristique nominale (11), avec préférentiellement Y > 0 et inférieur ou égal à 20, de préférence X inférieur ou égal à 10, de préférence X inférieur ou égal à 5.

10. Procédé selon l'une quelconque des revendications précédentes, comprenant l'exécution de l'une au moins des étapes suivantes lorsqu'une anomalie de fermeture est détectée :
- émission d'un signal visuel d'alarme à l'attention d'un utilisateur de la machine,
- émission d'un signal sonore d'alarme à l'attention d'un utilisateur de la machine,
- envoi d'un message électronique à un centre de maintenance,
- interruption de la phase de fermeture,
- déclenchement d'une phase d'éloignement des deux parties (3, 4),
- interruption d'une circulation d'eau dans un circuit de la machine, par exemple par arrêt d'une pompe (30) de circulation d'eau dans un circuit de la machine.

11. Dispositif de détection d'une anomalie de fermeture d'un groupe d'infusion d'une machine de préparation de boissons, le groupe d'infusion (100) comportant une chambre d'infusion (5) délimitée par deux parties (3, 4) présentant une mobilité l'une par rapport à l'autre, au moins l'une des deux parties (3, 4) étant déplacée par un actionneur (61) comprenant une motorisation (6) électrique, lesdites deux parties (3, 4) étant configurées pour, lors d'une phase de fermeture du groupe d'infusion (100) se rapprocher l'une de l'autre pour enserrer un conditionnement (2), le dispositif étant configuré pour exécuter les étapes suivantes :
- détermination d'une caractéristique nominale (11) intensité d'un courant d'alimentation de la motorisation (6) en fonction du temps,
- mesure de l'intensité de courant d'alimentation de la motorisation (6), au moins au cours d'une phase de fermeture du groupe d'infusion (100),
- comparaison de l'intensité mesurée avec ladite caractéristique nominale (11), et détection d'une anomalie de fermeture lorsqu'une mesure de l'intensité s'éloigne de la caractéristique nominale (11) de plus d'un seuil (12, 13),
***caractérisé en ce que*** la caractéristique nominale (11) est déterminée à partir d'au moins une phase de mesure effectuée sur ladite machine de préparation de boissons au cours d'au moins une phase de fermeture correctement déroulée, la caractéristique nominale (11) étant réactualisée à partir d'une caractéristique d'intensité du courant d'alimentation de la motorisation (6) en fonction du temps déterminée lors d'une phase de fermeture s'étant correctement déroulée.

12. Machine de préparation de boisson comprenant au moins :
- au moins un groupe d'infusion (100) comportant une chambre d'infusion (5) délimitée par deux parties (3, 4) présentant une mobilité l'une par rapport à l'autre,
- un actionneur (61) comprenant une motorisation (6) électrique, l'actionneur étant configuré pour :
o lors d'une phase de fermeture du groupe d'infusion (100) : rapprocher les deux parties (3,4) l'une de l'autre pour enserrer un conditionnement (2),
o lors d'une phase d'ouverture du groupe d'infusion (100) : éloigner les deux parties (3,4) l'une de l'autre pour permettre à un conditionnement (2) de pénétrer ou de sortir de la chambre d'infusion (5),
- un dispositif selon la revendication précédente.

13. Machine selon la revendication précédente, configurée de sorte que, lorsque le dispositif détection détecte une anomalie de fermeture, l'actionneur (61) stoppe le rapprochement des deux parties (3,4) et/ou éloigne les deux parties (3,4) l'une de l'autre.

14. Utilisation d'un conditionnement (2) comprenant un produit à infuser, pour :
- mettre en œuvre une machine de préparation de boisson selon la revendication 12 comprenant un conditionnement (2) entre les deux parties (3,4), ou
- mettre en œuvre le procédé selon l'une quelconque des revendications 1 à 10.

## Patentansprüche

1. Verfahren zur Erkennung einer Schließstörung einer Infusionsgruppe einer Getränkezubereitungsmaschine, wobei die Infusionsgruppe (100) eine Infusionskammer (5) aufweist, die durch zwei Teile (3, 4) begrenzt ist, die eine Beweglichkeit in Bezug aufeinander aufweisen, wobei mindestens eines der beiden Teile (3, 4) durch ein Stellglied (61) bewegt wird, das einen elektrischen Antrieb (6) umfasst, wobei die beiden Teile (3, 4) so konfiguriert sind, dass sie sich während einer Schließphase der Infusionsgruppe (100) einander annähern, um eine Verpackung (2) zu umschließen, wobei das Verfahren die folgenden Schritte umfasst:
- Bestimmung einer Nennkennlinie (11) für die Stromstärke eines Versorgungsstroms des Antriebs (6) in Abhängigkeit von der Zeit,
- Messung der Stromstärke der Stromversorgung des Antriebs (6), mindestens während einer Schließphase der Infusionsgruppe (100),
- Vergleich der gemessenen Stromstärke mit der Nennkennlinie (11) und Erkennung einer Schließstörung, wenn eine Messung der Stromstärke von der Nennkennlinie (11) um mehr als einen Schwellenwert (12, 13) abweicht,
***dadurch gekennzeichnet, dass*** die Nennkennlinie (11) ausgehend von mindestens einer an der Getränkezubereitungsmaschine während mindestens einer ordnungsgemäß abgelaufenen Schließphase durchgeführten Messphase bestimmt wird, wobei die Nennkennlinie (11) ausgehend von einer während einer ordnungsgemäß abgelaufenen Schließphase bestimmten Stromstärkekennlinie des Versorgungsstroms des Antriebs (6) in Abhängigkeit von der Zeit neu aktualisiert wird.

2. Verfahren nach dem vorhergehenden Anspruch, wobei die Neuaktualisierung der Nennkennlinie (11) durch Mittelung der Stromstärkekennlinien des Versorgungsstroms des Antriebs (6) in Abhängigkeit von der Zeit erfolgt, die den jüngsten ordnungsgemäß abgelaufenen Schließphasen entspricht, die in einem gleitenden Fenster von höchstens p ordnungsgemäß abgelaufenen Schließphasen enthalten sind, wobei p eine ganze Zahl ist, die vorzugsweise zwischen 2 und 100 liegt.

3. Verfahren nach dem vorhergehenden Anspruch, wobei p zwischen 5 und 20 liegt und vorzugsweise p gleich 10 ist.

4. Verfahren nach einem der vorhergehenden Ansprüche, wobei eine erste Nennkennlinie (11) durch Bestimmung von n Stromstärkekennlinien des Versorgungsstroms des Antriebs (6) in Abhängigkeit von der Zeit, die n ordnungsgemäß abgelaufenen Schließphasen entsprechen, und durch Mittelung dieser n Kennlinien erzielt wird, wobei n eine ganze Zahl ist, die vorzugsweise zwischen 1 und 10 liegt.

5. Verfahren nach dem vorhergehenden Anspruch, wobei n gleich 2 ist.

6. Verfahren nach einem der beiden Ansprüche, umfassend einen Rücksetzschritt, der darin besteht, eine neue erste Nennkennlinie (11) zu bestimmen und die zuvor bestimmte erste Nennkennlinie durch die neue erste Nennkennlinie zu ersetzen.

7. Verfahren nach einem der vorhergehenden Ansprüche, wobei der Schwellenwert (12, 13) durch eine erste Schablone (12), Min.-Schablone, die im Wesentlichen parallel zu der Nennkennlinie (11) mit dem unteren Wert verläuft, und durch eine zweite Schablone (13), Max.-Schablone, die im Wesentlichen parallel zu der Nennkennlinie (11) mit dem oberen Wert verläuft, definiert ist.

8. Verfahren nach dem vorhergehenden Anspruch, wobei die Min.-Schablone (12) einen Wert besitzt, der im Wesentlichen gleich - X % des Wertes der Nennkennlinie (11) ist, wobei X vorzugsweise >0 und X kleiner oder gleich 20, X vorzugsweise kleiner oder gleich 10, X vorzugsweise kleiner oder gleich 5 ist.

9. Verfahren nach einem der beiden vorhergehenden Ansprüche, wobei die Max.-Schablone (13) einen Wert besitzt, der im Wesentlichen gleich + Y % des Wertes der Nennkennlinie (11) ist, wobei Y vorzugsweise >0 und kleiner oder gleich 20, X vorzugsweise kleiner oder gleich 10, X vorzugsweise kleiner oder gleich 5 ist.

10. Verfahren nach einem der vorhergehenden Ansprüche, umfassend die Durchführung eines oder mehrerer der folgenden Schritte, wenn eine Schließstörung erkannt wird:
- Ausgabe eines optischen Alarmsignals für einen Benutzer der Maschine,
- Ausgabe eines akustischen Alarmsignals für einen Benutzer der Maschine,
- Senden einer elektronischen Nachricht an ein Service-Center,
- Unterbrechung der Schließphase,
- Auslösung einer Phase der Entfernung der beiden Teile (3, 4),
- Unterbrechung einer Wasserzirkulation in einem Kreislauf der Maschine, beispielsweise durch Abschalten einer Pumpe (30) zur Wasserzirkulation in einem Kreislauf der Maschine.

11. Verfahren zur Erkennung einer Schließstörung einer Infusionsgruppe einer Getränkezubereitungsmaschine, wobei die Infusionsgruppe (100) eine Infusionskammer (5) aufweist, die durch zwei Teile (3, 4) begrenzt ist, die eine Beweglichkeit in Bezug aufeinander aufweisen, wobei mindestens eines der beiden Teile (3, 4) durch ein Stellglied (61) bewegt wird, das einen elektrischen Antrieb (6) umfasst, wobei die beiden Teile (3, 4) so konfiguriert sind, dass sie sich während einer Schließphase der Infusionsgruppe (100) einander annähern, um eine Verpackung (2) zu umschließen, wobei die Vorrichtung so konfiguriert ist, dass sie die folgenden Schritte durchführt:
- Bestimmung einer Nennkennlinie (11) der Stromstärke eines Versorgungsstroms des Antriebs (6) in Abhängigkeit von der Zeit,
- Messung der Stromstärke des Versorgungsstroms des Antriebs (6), zumindest während einer Schließphase der Infusionsgruppe (100),
- Vergleich der gemessenen Stromstärke mit der Nennkennlinie (11) und Erkennung einer Schließstörung, wenn eine Messung der Stromstärke von der Nennkennlinie (11) um mehr als einen Schwellenwert (12, 13) abweicht,
***dadurch gekennzeichnet, dass*** die Nennkennlinie (11) ausgehend von mindestens einer an der Getränkezubereitungsmaschine während mindestens einer ordnungsgemäß abgelaufenen Schließphase durchgeführten Messphase bestimmt wird, wobei die Nennkennlinie (11) ausgehend von einer während einer ordnungsgemäß abgelaufenen Schließphase bestimmten Stromstärkekennlinie des Versorgungsstroms des Antriebs (6) in Abhängigkeit von der Zeit neu aktualisiert wird.

12. Getränkezubereitungsmaschine, umfassend mindestens:
- mindestens eine Infusionsgruppe (100) mit einer Infusionskammer (5), die durch zwei Teile (3, 4) begrenzt ist, die eine Beweglichkeit in Bezug aufeinander aufweisen,
- ein Stellglied (61), das einen elektrischen Antrieb (6) umfasst, wobei das Stellglied zu Folgendem konfiguriert ist:
o bei einer Schließphase der Infusionsgruppe (100): Zusammenführen der beiden Teile (3,4), um eine Verpackung (2) zu umschließen,
o während einer Öffnungsphase der Infusionsgruppe (100): Entfernen der beiden Teile (3,4) voneinander, damit eine Verpackung (2) in die Infusionskammer (5) eindringen oder aus ihr heraustreten kann,
- eine Vorrichtung nach dem vorhergehenden Anspruch.

13. Maschine nach dem vorhergehenden Anspruch, die so konfiguriert ist, dass, wenn die Erkennungsvorrichtung eine Schließstörung erkennt, das Stellglied (61) die Annäherung der beiden Teile (3,4) stoppt und/oder die beiden Teile (3,4) voneinander entfernt.

14. Verwendung einer Verpackung (2), die ein Infusionsprodukt umfasst, für Folgendes:
- Einsetzen einer Getränkezubereitungsmaschine nach Anspruch 12, die eine Verpackung (2) zwischen den beiden Teilen (3,4) umfasst, oder
- Einsetzen des Verfahrens nach einem der Ansprüche 1 bis 10.

## Claims

1. Method for detecting an anomaly in the closure of an infusion unit of a beverage preparation machine, the infusion unit (100) including an infusion chamber (5) which is delimited by two parts (3, 4) that can be moved relative to one another, at least one of the two parts (3, 4) being moved by an actuator (61) comprising an electric motor (6), said two parts (3, 4) being configured so that, during a closing phase of the infusion unit (100), they move towards one another to surround a package (2), the method comprising the following steps:
- determining a nominal characteristic (11) of the intensity of a supply current to the motor (6) as a function of time,
- measuring the intensity of the supply current intensity to the motor (6), at least during a closing phase of the infusion unit (100),
- comparing the measured intensity with said nominal characteristic (11), and detecting an anomaly in the closure when a measurement of the intensity deviates from the nominal characteristic (11) by more than one threshold (12, 13),
***characterised* in *that*** the nominal characteristic (11) is determined from at least one measurement phase carried out on said beverage preparation machine during at least one closing phase which has been performed correctly, the nominal characteristic (11) being updated again from a characteristic of the intensity of the supply current to the motor (6) as a function of the time determined during a closing phase which has been performed correctly.

2. Method according to the preceding claim, wherein the nominal characteristic (11) is updated again using characteristics of the intensity of the supply current to the motor (6) as a function of the time corresponding to the most recent correctly performed closing phases included in a sliding window of at most p correctly performed closing phases, with p being an integer, preferably between 2 and 100.

3. Method according to the preceding claim, wherein p is between 5 and 20 and preferably p is equal to 10.

4. Method according to any one of the preceding claims, wherein a first nominal characteristic (11) is obtained by determining n characteristics of the intensity of the supply current to the motor (6) as a function of time, corresponding to n correctly performed closing phases, and by averaging these n characteristics, with n being an integer, preferably between 1 and 10.

5. Method according to the preceding claim, wherein n is equal to 2.

6. Method according to any one of the two claims, comprising a resetting step consisting of determining a new first nominal characteristic (11) and replacing the first previously determined nominal characteristic with said new first nominal characteristic.

7. Method according to any one of the preceding claims, wherein the threshold (12, 13) is defined by a first gauge (12), referred to as the min gauge, substantially parallel to the nominal characteristic (11) by lower value and by a second gauge (13), referred to as the max gauge, substantially parallel to the nominal characteristic (11) by higher value.

8. Method according to the preceding claim, wherein the min gauge (12) has a value substantially equal to - X% of the value of the nominal characteristic (11), with preferably X >0 and X less than or equal to 20, preferably X less than or equal to 10, preferably X less than or equal to 5.

9. Method according to any one of the two preceding claims, wherein the max gauge (13) has a value substantially equal to + Y% of the nominal characteristic value (11), with preferably Y > 0 and less than or equal to 20, preferably X less than or equal to 10, preferably X less than or equal to 5.

10. Method according to any one of the preceding claims, comprising performing at least one of the following steps when an anomaly of the closure is detected:
- emitting a visual alarm signal for the attention of a user of the machine,
- emitting an audible alarm signal for the attention of a user of the machine,
- sending an electronic message to a maintenance centre,
- interrupting the closing phase,
- triggering a phase in which the two parts (3, 4) are moved apart,
- interrupting water circulation in a circuit of the machine, for example by stopping a water circulation pump (30) in a circuit of the machine.

11. Device for detecting an anomaly in the closure of an infusion unit of a beverage preparation machine, the infusion unit (100) including an infusion chamber (5) which is delimited by two parts (3, 4) that can be moved relative to one another, at least one of the two parts (3, 4) being moved by an actuator (61) comprising an electric motor (6), said two parts (3, 4) being configured so that, during a closing phase of the infusion unit (100), they move towards one another to surround a package (2), the device being configured to perform the following steps:
- determining a nominal characteristic (11) of the intensity of the the supply current of the motor (6) as a function of time,
- measuring the intensity of the supply current of the motor (6), at least during a closing phase of the infusion unit (100),
- comparing the measured intensity with said nominal characteristic (11), and detecting an anomaly in the closure when a measurement of the intensity deviates from the nominal characteristic (11) by more than one threshold (12, 13),
***characterised in that*** the nominal characteristic (11) is determined from at least one measurement phase carried out on said beverage preparation machine during at least one correctly performed closing phase, the nominal characteristic (11) being updated again from a characteristic of the intensity of the motor supply current (6) as a function of the time determined during a closing phase that has been performed correctly.

12. Beverage preparation machine comprising at least:
- at least one infusion unit (100) including an infusion chamber (5) which is delimited by two parts (3, 4) that can be moved relative to one another,
- an actuator (61) comprising an electric motor (6), the actuator being configured:
o during a closing phase of the infusion unit (100): to bring the two parts (3, 4) closer together to surround a package (2),
o during an opening phase of the infusion unit (100): to move the two parts (3, 4) away from each other to allow a package (2) to enter or exit the infusion chamber (5),
- a device according to the preceding claim.

13. Machine according to the preceding claim, configured such that, when the detection device detects an anomaly in the closure, the actuator (61) stops the two parts (3, 4) from moving closer together and/or moves the two parts (3, 4) away from one another.

14. Use of a package (2) comprising a product to be infused, for:
- operating a beverage preparation machine according to claim 12 comprising a package (2) between the two parts (3, 4), or
- implementing the method according to any one of claims 1 to 10.
